# EUROPEAN PATENT SPECIFICATION

(11) **EP 2 051 412 B1**
(45) Date of publication and mention of the grant of the patent: **19.06.2013**
(21) Application number: 08016332.2
(22) Date of filing: 17.09.2008
(51) Int. Cl.: H04B 10/25, H04B 10/40

(54) **Bidirectional HDCP-based data transmission apparatus using single optical fiber**
Vorrichtung zur bidirektionalen HDCP-basierten Datenübertragung über einen einzelnen Lichtwellenleiter
Appareil de transmission de données à base de HDCP bidirectionnelles, en utilisant une seule fibre optique

(30) Priority: 19.10.2007 TW 96139091
(43) Date of publication of application: 22.04.2009
(73) Proprietor: AmTRAN Technology Co., Ltd., Taiwan (TW)
(72) Inventor: Yu, Wen-Ping, Chung Ho City Taipei County 235 (TW)
(74) Representative: Viering, Jentschura & Partner

(56) References cited:
- US-A1- 2006 067 690
- US-A1- 2007 003 288

## Description

### BACKGROUND OF THE INVENTION

### 1. Field of the invention

The invention relates to a bidirectional HDCP (High-Bandwith Digital Content)-based data transmission apparatus which only uses one optical fiber.

### 2. Description of the prior art

HDCP (high-bandwidth digital content protection) is a digital rights management specification developed by Intel Corporation to protect digital entertainment traveled across DVI (digital visual interface) or HDMI (high definition multimedia interface) connections from being illegally copied. The HDCP specification provides a robust, cost-effective and transparent method for transmitting and receiving digital entertainment content to DVI/HDMI-compliant digital displays (e.g., high definition television or flat panel such as plasma, LCD and/or DLP, etc).

In general, HDCP encrypts the transmission of digital content between the video source and the digital display. And, HDCP is not designed to prevent copying or recording of the digital content per se, but rather designed to protect the integrity of content during transmission. The video source or transmitter could be, for instance, a DVD player, a computer, or a set-up box. The digital display or receiver could be, for instance, a digital television, a monitor, or a projector. The implementation of HDCP requires HDCP enabled devices which has a set of secret keys. During authentication, the receiving device will only accept content after it acknowledges the keys. To further protect the digital content, the transmitter and receiver generate a shared secret key value that is continuously checked throughout the transmission. After authentication is established, the transmitter encrypts the data and sends it to the receiver for decryption.

High-bandwidth transmission of digital content is usually achieved by one of two means: shielded copper wires (such as coaxial cable) or fiber optic cable. The first generation of HDCP transmission systems was known of using parallel shielded copper wire cables, such as DVI cables or HDMI cables.

However, the bandwidth of this kind of cable has limitations in transmitting data. When the distance of transmission is elongated, the cost of the shielded copper wire cable will increase and the transmitted data will decay rapidly. In view of this fact, a multiple parallel optical fiber link was introduced between transmitters and receivers. The optical systems of prior arts usually adopt at least two optical fiber links for HDCP applications. For instance, a four fiber module configuration has three forward channels and one backward channel, and it requires four lasers or other like light sources, four optical fiber links, and four receivers. Similarly, a six fiber module configuration has five forward channels and one backward channel, and it requires six lasers, six optical fiber links, and six receivers. For longer distance applications under the configurations, the cost of multiple parallel optical fibers is a concern, and the arrangement and maintenance of the multiple parallel optical fibers must increase the loading.

A bidirectional HDCP-based data transmission apparatus using an optical fibre is known from US 2007/003288 A1. Another bidirectional data transmission apparatus using one optical fibre and wherein a forward transmission module and a backward transmission module are optically coupled to the core of the optical fibre is known from US 2006/067690 A1.

Accordingly, one scope of the invention is to provide a data transmission apparatus which transmits data only via one optical fiber. The bidirectional data transmissions of the data transmission apparatus are HDCP-based, and thereby the quantity and the cost of optical devices can be decreased to reduce the arrangement and maintenance of optical fibers.

### SUMMARY OF THE INVENTION

This object is achieved by a bidirectional HDCP-based data transmission apparatus according to claim 1.

According to the bidirectional HDCP-based data transmission apparatus using an optical fiber of a preferred embodiment of the invention, the optical fiber includes a core having a first facet and a second facet. The bidirectional HDCP-based data transmission apparatus includes a forward transmission module and a backward transmission module. The forward transmission module is optically coupled to the first facet of the core of the optical fiber. The forward transmission module is used for emitting at least two forward light signals into the first facet of the core when being driven. The at least two forward light signals are then transmitted over the optical fiber. One of the at least two forward light signals is associated with HDCP data. The backward transmission module is optically coupled to the second facet of the core of the optical fiber. The backward transmission module is used for receiving the at least two forward light signals transmitted over the optical fiber, and emitting at least one backward light signal into the second facet of the core when being driven. The at least one backward light signal is then transmitted over the optical fiber. The at least one backward light signal is associated with HDCP data. The forward transmission module also receives the at least one backward light signal transmitted over the optical fiber.

Accordingly, the data transmission apparatus according to the invention transmits data only via one optical fiber. The bidirectional data transmissions of the data transmission apparatus are HDCP-based, and thereby the quantity and the cost of optical devices can be decreased to reduce the arrangement and maintenance of optical fibers. In addition, the invention can be used in a bidirectional symmetrical transmitting mode or in a bidirectional asymmetrical mode because of the quantity of adopted light emitters.

The advantage and spirit of the invention may be understood by the following recitations together with the appended drawings.

### BRIEF DESCRIPTION OF THE APPFACETED DRAWINGS

FIG. 1 is a schematic diagram illustrating a bidirectional HDCP-based data transmission apparatus according to a preferred embodiment of the invention.
FIG. 2A is a schematic diagram illustrating the forward transmission module in FIG. 1.
FIG. 2B is a schematic diagram illustrating the backward transmission module in FIG. 1.
FIG. 3 is a schematic diagram illustrating a bidirectional HDCP-based data transmission apparatus.

### DETAILED DESCRIPTION OF THE INVENTION

The scope of the invention is to provide a bidirectional HDCP-based data transmission apparatus. The bidirectional HDCP-based data transmission apparatus according to the invention transmits data only via one optical fiber, and thereby the quantity and the cost of optical devices can be decreased to reduce the arrangement and maintenance of optical fibers. The spirit and feature of the present invention will be described in detail by the following preferred embodiment.

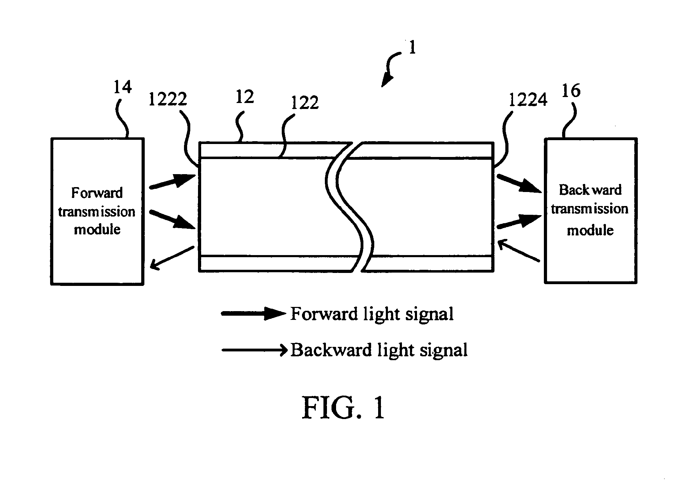

Please refer to FIG. 1. FIG. 1 is a schematic diagram illustrating a bidirectional HDCP-based data transmission apparatus 1 according to a preferred embodiment of the invention. As shown in FIG. 1, the bidirectional HDCP-based data transmission apparatus 1 according to a preferred embodiment of the invention uses an optical fiber 12. The optical fiber 12 includes a core 122 having a first facet 1222 and a second facet 1224. The bidirectional HDCP-based data transmission apparatus 1 includes a forward transmission module 14 and a backward transmission module 16.

As shown in FIG. 1, the forward transmission module 14 is optically coupled to the first facet 1222 of the core 122 of the optical fiber 12. The backward transmission module 16 is optically coupled to the second facet 1224 of the core 122 of the optical fiber 12.

Also shown in FIG. 1, the forward transmission module 14 is used for emitting at least two forward light signals into the first facet 1222 of the core 122 when being driven. The at least two forward light signals are then transmitted over the optical fiber 12. One of the at least two forward light signals is associated with HDCP data. The backward transmission module 16 is used for receiving the at least two forward light signals transmitted over the optical fiber 12, and emitting at least one backward light signal into the second facet 1224 of the core 122 when being driven. The at least one backward light signal is then transmitted over the optical fiber 12. The forward transmission module 14 also receives the at least one backward light signal transmitted over the optical fiber 12, and the at least one backward light signal includes a protection scheme light signal 1622 relative to the HDCP data.

In a practical application, the forward transmission module 14 of the bidirectional HDCP-based data transmission apparatus 1 can be included in an audio and high definition (HD) video mediator, and the backward transmission module 16 can be included in a high definition display panel and speaker system. In a home entertainment system application, for instance, the audio and high definition video mediator can be a DVD player, a computer, or a set-top box, and the high definition display panel and speaker system can be a high definition or digital television, a monitor, or a projector. A user can use the system to play movies, music, and the like.

In general, the audio and high definition video mediator can be any device or system that can output digital audio and/or video data that is content protected, and the high definition display panel and speaker system can be any device or system that can display and/or sound the digital content transmitted from the audio and high definition video mediator. Audio content includes, for instant, music, video sound tracks, audio books, machine messages (e.g., coded binary message for machine-to machine communication), and human messages. Video content includes digital video, as well as other visual content such as presentation slides, graphical images, and digital art.

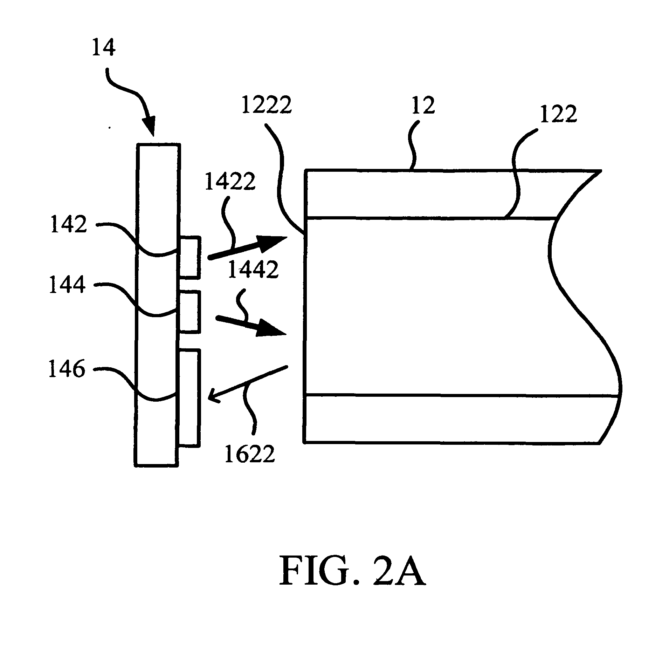

Please refer to FIG. 2A. FIG. 2A is a schematic diagram illustrating the forward transmission module 14 in FIG. 1. As shown in FIG. 2A, in an embodiment, the at least two forward light signals include a first forward light signal 1422 and a second forward light signal 1442. The forward transmission module 14 includes a first light emitter 142 and a second light emitter 144.

As shown in FIG. 2A, the first light emitter 142 is optically coupled to the first facet 1222 of the core 122 of the optical fiber 12. The first light emitter 142 is used for emitting the first forward light signal 1422 into the first facet 1222 of the core 122 when being driven. Similarly, the second light emitter 144 is optically coupled to the first facet 1222 of the core 122 of the optical fiber 12. The second light emitter 144 is used for emitting the second forward light signal 1442 into the first facet 1222 of the core 122 when being driven.

Also shown in FIG. 2A, in the embodiment, the forward transmission module 14 further includes a first photodetector 146. The first photodetector 146 is optically coupled to the first facet 1222 of the core 122 of the optical fiber 12. The first photodetector 146 is used for receiving the protection scheme light signal 1622 transmitted over the optical fiber 12.

In order to protect the integrity of the digital audio/video content as being transmitted, in an embodiment, the formats of the first forward light signal 1422, the second forward light signal 1442, and the protection scheme light signal 1622 comply with HDCP specification. Hereby, the integrity of the digital audio/video content as being transmitted can be protected by an authentication handshake and encryption of HDCP.

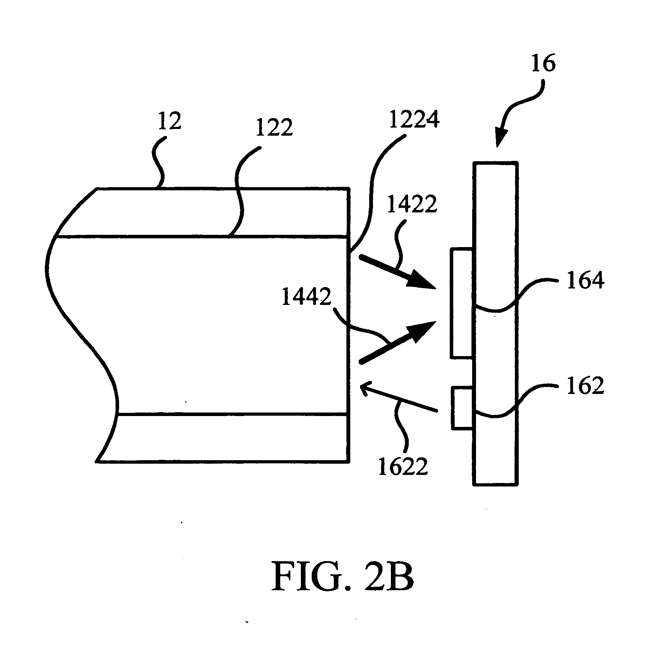

Please refer to FIG. 2B. FIG. 2B is a schematic diagram illustrating the backward transmission module 16 in FIG. 1. As shown in FIG. 2B, in an embodiment, the backward transmission module 16 includes a third light emitter 162 and a second photodetector 164.

As shown in FIG. 2B, the third light emitter 162 is optically coupled to the second facet 1224 of the core 122 of the optical fiber 12. The third light emitter 162 is used for emitting the protection scheme light signal 1622 into the second facet 1224 of the core 122 when being driven. The second photodetector 164 is optically coupled to the second facet 1224 of the core 122 of the optical fiber 12. The second photodetector 164 is used for receiving the first forward light signal 1422 and the second forward light signal 1442 transmitted over the optical fiber 12.

In an embodiment, the first forward light signal 1422 and the second forward light signal 1442 are in the range of 800nm to 1600nm at a modulation level of 1GHz or greater, and the protection scheme light signal 1622 is in the range of 400nm to 750nm at a modulation level of 10MHz or less. Therefore, HDCP is used to deliver uncompressed digital audio and/or video content using a high speed forward transmission (e.g., > 1 Giga-bit/s) of a fiber.

Relatively, in the embodiment, the frequency of the first forward light signal 1422 is in a GHz range, the frequency of the second forward light signal 1442 is in a GHz range and differs from that of the first forward light signal 1422, and the frequency of the protection scheme light signal 1622 is in a MHz range. Therefore, the first light emitter 142 can be a first laser diode, the second light emitter 144 can be a second laser diode, and the third light emitter 162 can be a light emitting diode.

And, in the embodiment, the first laser diode can adopt a laser diode with a wavelength of 1310 nm, and the second laser diode can adopt a laser diode with a wavelength of 1550 nm.

In order to transmit additional control signals via the optical fiber 12, in an embodiment, the backward light signal can include a control light signal (such as a control signal of a remote control of a television). The backward transmission module 16 can further selectively include a fourth light emitter. The fourth light emitter is optically coupled to the second facet 1224 of the core 122 of the optical fiber 12. The fourth light emitter is used for emitting the control light signal into the second facet 1224 of the core 122 when being driven. The control light signal is then transmitted over the optical fiber 12. Hereby, the first photodetector 146 receives the control light signal transmitted over the optical fiber 12.

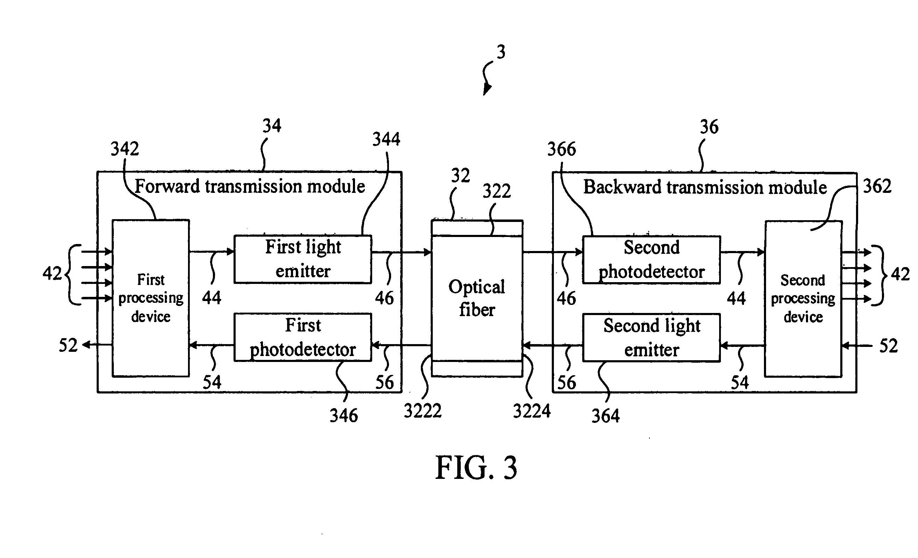

In addition, please refer to FIG. 3. FIG. 3 is a schematic diagram illustrating a bidirectional HDCP-based data transmission apparatus 1. As shown in FIG. 3, the bidirectional HDCP-based data transmission apparatus 1 uses an optical fiber 32. The optical fiber 32 includes a core 322 having a first facet 3222 and a second facet 3224. The bidirectional HDCP-based data transmission apparatus 1 includes a forward transmission module 34 and a backward transmission module 36.

As shown in FIG. 3, the forward transmission module 34 includes a first processing device 342, a first light emitter 344, and a first photodetector 346. The backward transmission module 36 includes a second processing device 362, a second light emitter 364, and a second photodetector 366.

Also shown in FIG. 3, the first processing device 342 is used for receiving at least two forward electric signals 42 associated with HDCP data, and transforming the at least two forward electric signals 42 into a serial forward electric signal 44.

Also shown in FIG. 3, the first light emitter 344 is electrically connected to the first processing device 342 and optically coupled to the first facet 3222 of the core 322 of the optical fiber 32. The first light emitter 344 is used for emitting, driven by the first processing device 342 in accordance with the serial forward electric signal 44, a forward light signal 46 into the first facet 3222 of the core 322. The forward light signal 46 is then transmitted over the optical fiber 32.

Also shown in FIG. 3, the second photodetector 366 is optically coupled to the second facet 3224 of the core 322 of the optical fiber 32. The second photodetector 366 is used for receiving the forward light signal 46 transmitted over the optical fiber 32, and converting the forward light signal 46 into the serial forward electric signal 44.

Also shown in FIG. 3, the second processing device 362 is electrically connected to the second photodetector 366. The second processing device 362 is used for receiving the serial forward electric signal 44, and interpreting the serial forward electric signal 44 into the at least two forward electric signals 42 associated with the HDCP data. Moreover, the second processing device 362 also receives at least one backward electric signal 52, and transforms the at least one backward electric signal 52 into a serial backward electric signal 54.

Also shown in FIG. 3, the second light emitter 364 is electrically connected to the second processing device 362 and optically coupled to the second facet 3224 of the core 322 of the optical fiber 32. The second light emitter 364 is used for emitting, driven by the second processing device 362 in accordance with the serial backward electric signal 54, a backward light signal 56 into the second facet 3224 of the core 322. The backward light signal 56 is then transmitted over the optical fiber 32.

Also shown in FIG. 3, the first photodetector 346 is electrically connected to the first processing device 342 and optically coupled to the first facet 3222 of the core 322 of the optical fiber 32. The first photodetector 346 is used for receiving the backward light signal 56 transmitted over the optical fiber 32, and converting the backward light signal 56 into the serial backward electric signal 54.

Also shown in FIG. 3, the first processing device 342 receives the serial backward electric signal 54, and interprets the serial backward electric signal 54 into the at least one backward electric signal 52. The at least one backward electric signal 52 includes a protection scheme electrical signal relative to the HDCP data.

In an arrangement, the first processing device 342 and the second processing device 362 are MUX/DEMUXs.

Furthermore, in an embodiment, the active areas of the first photodetector 146 and the second photodetector 164 are about 80 to 100 microns across (e.g., square, circular, or irregular shape), and the core 122 of the optical fiber 12 is about 62.5 microns in diameter. It is notable that the active areas of the first photodetector 146 and the second photodetector 164 can be larger (e.g., 100 to 500 microns across, or more).

Moreover, it is notable that in order to transmit data with Giga-bit/s range (such as uncompressed video stream), the bidirectional HDCP-based data transmission apparatus 1 of the invention can adopt glass optical fiber to transmit data.

It is certain that the bidirectional HDCP-based data transmission apparatus 1 of the invention can be applied to other protection scheme applications. For instant, the forward transmission module 14 can be used to deliver payload data, while the backward transmission module 16 can be used to deliver link management or overhead information, such as transmission statistics (e.g., amount of payload delivered and transmission time) and customer data (e.g., credit card info, movie selection, and subscriber feedback).

Compared with prior arts, the data transmission apparatus according to the invention transmits data only via one optical fiber. The bidirectional data transmissions of the data transmission apparatus are HDCP-based, and thereby the quantity and the cost of optical devices can be decreased to reduce the arrangement and maintenance of optical fibers. In addition, the invention can apply two, three, or more than four light emitters in a bidirectional symmetrical transmitting mode or in a bidirectional asymmetrical mode because of the quantity of adopted light emitters. Thus, when the data required of being transmitted becomes larger, the problem of the insufficiency of transmitting data only by a light emitter will be solved.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A bidirectional HDCP, High-Bandwidth Digital Content Protection, -based data transmission apparatus (1) using an optical fiber (12) comprising a core (122) having a first facet (1222) and a second facet (1224), said bidirectional HDCP-based data transmission apparatus (1) comprising:
a forward transmission module (14), for being optically coupled to the first facet (1222) of the core (122) of the optical fiber (12), and emitting at least two forward light signals (1422, 1442) associated with HDCP data into the first facet (1222) of the core (122), the forward transmission module (14) transmitting the at least two forward light signals (1422, 1442) over the optical fiber (12), wherein the forward transmission module (14) comprises:
a first light emitter (142), for being optically coupled to the first facet (1222) of the core (122) of the optical fiber (12), for emitting the first forward light signal (1422) into the first facet (1222) of the core (122) when being driven;
a second light emitter (144), for being optically coupled to the first facet (1222) of the core (122) of the optical fiber (12), for emitting the second forward light signal (1442) into the first facet (1222) of the core (122) when being driven; and
a first photodetector (146), wherein active areas of the first photodetector (146) are 80 - 500 microns in diameter, the first photodetector (146) is optically coupled to the first facet (1222) of the core (122) of the optical fiber (12), for receiving a backward transmission
light signal (1622) transmitted over the optical fiber (12) ; and
a backward transmission module (16), for being optically coupled to the second facet (1224) of the core (122) of the optical fiber (12), for receiving the at least two forward light signals (1422, 1442) transmitted over the optical fiber (12), and emitting the backward light signal (1622) into the second facet (1224) of the core (122) over the optical fiber (12) to the forward transmission module (14), wherein the backward light signal (1622) comprises a protection scheme light signal relative to the HDCP data, the backward transmission module (16) further comprises a second photodetector (164), wherein active areas of the second photodetector (164) are 80 ∼ 500 microns in diameter;
wherein the forward transmission module (14) and the backward transmission module (16) are capable of respectively transmitting the two forward light signals (1422, 1442) and the backward light signal (1622) simultaneously; and
wherein the formats of the first light signal (1422), the second forward light signal (1442) and the protection scheme light signal (1622) camply with HDCP specification; and
wherein the backward transmission module (16) comprises:
a third light emitter (162), for being optically coupled to the second facet (1224) of the core (122) of the optical fiber (12), for emitting the protection scheme light signal into the second facet (1224) of the core (122) when being driven; and
the second photodetector (164), for being optically coupled to the second facet (1224) of the core (122) of the optical fiber (12), for receiving the first forward light signal (1422) and the second forward light signal (1442) transmitted over the optical fiber (12); and
wherein the modulation frequency of the first forward light signal (1422) is in a GHz range, the modulation frequency of the second forward light signal (1442) is in a GHz range and differs from that of the first forward light signal (1422), and the modulation frequency of the protection scheme light signal (1622) is in a MHz range,
wherein the first forward light signal (1422) and the second forward light signal (1442) are in the range of 800 nm to 1600 nm at a modulation frequency of 1 GHz or greater, and the protection scheme light signal is in the range of 400 nm to 750 nm at a modulation frequency of 10 MHz or less; and
wherein the first light emitter (142) is a first laser diode with a wavelenght of 1310 nm, the second light emitter (144) is a second laser diode with a wavelength of 1550 nm, and the third light emitter (162) is a light emitting diode.

2. The bidirectional HDCP-based data transmission apparatus (1) of claim 1, wherein the at least one backward light signal (1622) also comprises a control light signal, the backward transmission module (16) further comprises a fourth light emitter, optically coupled to the second facet (1224) of the core (122) of the optical fiber (12), for emitting the control light signal into the second facet (1224) of the core (122) when being driven, the control light signal is then transmitted over the optical fiber (12), the first photodetector (146) also receives the control light signal transmitted over the optical fiber (12).

## Patentansprüche

1. Eine Vorrichtung (1) zur bidirektionalen Übertragung von HDCP, (High-Bandwidth Digital Content Protection) Schutz von digitalen Inhalten mit hoher Bandbreite, -basierten Daten, mit einer optischen Faser (12), die einen Kern (122) umfasst, der eine erste Facette (1222) und eine zweite Facette (1224) aufweist, wobei die Vorrichtung (1)zur bidirektionalen Übertragung von HDCP-basierten Daten umfasst:
ein Vorwärts-Übertragungsmodul (14) für die optische Kopplung mit der ersten Facette (1222) des Kerns (122) der optischen Faser (12), und das Emittieren von mindestens zwei mit HDCP Daten verknüpften Vorwärts-Lichtsignalen (1422, 1442) in die erste Facette (1222) des Kerns (122), wobei das Vorwärts-Übertragungsmodul (14) die mindestens zwei Vorwärts-Lichtsignale (1422, 1442) über die optische Faser (12) überträgt, wobei das Vorwärts-Übertragungsmodul (14)umfasst:
einen ersten Lichtemitter (142) für die optische Kopplung mit der ersten Facette (1222) des Kerns (122) der optischen Faser (12), der das erste Vorwärts-Lichtsignal (1422) in die erste Facette (1222) des Kerns (122) emittiert, wenn er betrieben wird;
einen zweiten Lichtemitter (144) für die optische Kopplung mit der ersten Facette (1222) des Kerns (122) der optischen Faser (12), der das zweite Vorwärts-Lichtsignal (1442) in die erste Facette (1222) des Kerns (122) emittiert, wenn er betrieben wird; und
ein erster Photodetektor (146), wobei die aktiven Flächen des ersten Photodetektors (146) 80 ∼ 500 Mikrometer im Durchmesser betragen, und der erste Photodetektor (146) optisch mit der ersten Facette (1222) des Kerns (122) der optischen Faser (12) gekoppelt ist, um ein Rückwärts-Übertragungslichtsignal (1622) zu empfangen, das von der optischen Faser (12) übertragen wird; und
ein Rückwärts-Übertragungsmodul (16) für die optische Kopplung mit der zweiten Facette (1224) des Kerns (122) der optischen Faser (12), und um die mindestens zwei Vorwärts-Lichtsignale (1422, 1442) zu empfangen, die von der optischen Faser (12) übertragen werden, und das das Rückwärts-Lichtsignal (1622) in die zweite Facette (1224) des Kerns (122) über die optische Faser (12) zu dem Vorwärts-Übertragungsmodul (14) emittiert, wobei das Rückwärts-Lichtsignal (1622) ein den HDCP Daten entsprechendes Schutzschema-Lichtsignal umfasst, und das Rückwärts-Übertragungsmodul (16) zudem einen zweiten Photodetektor (164) umfasst, wobei die aktiven Bereiche des zweiten Photodetektors (164) zwischen 80 ∼ 500 Mikrometer im Durchmesser betragen;
wobei das Vorwärts-Übertragungsmodul (14) und das Rückwärts-Übertragungsmodul (16) jeweils in der Lage sind, gleichzeitig die beiden Vorwärts-Lichtsignale (1422, 1442) und das Rückwärts-Lichtsignal (1622) zu übertragen; und wobei die Formate des ersten Lichtsignals (1422), des zweiten Vorwärts-Lichtsignals (1442) und des Schutzschema-Lichtsignals (1622) mit der HDCP-Spezifizierung übereinstimmen; und
wobei das Rückwärts-Übertragungsmodul (16) umfasst: einen dritten Lichtemitter (162) für die optische Kopplung mit der zweiten Facette (1224) des Kerns (122) der optischen Faser (12), der das Schutzschema-Lichtsignal in die zweite Facette (1224) des Kerns (122) emittiert, wenn er betrieben wird; und
der zweite Photodetektor (164) für die optische Kopplung mit der zweiten Facette (1224) des Kerns (122) der optischen Faser (12) und für den Empfang des ersten Vorwärts-Lichtsignals (1422) und des zweiten Vorwärts-Lichtsignals (1442), die von der optischen Faser (12) übertragen werden; und
wobei die Modulationsfrequenz des ersten Vorwärts-Lichtsignals (1422) in einem GHz-Bereich liegt, die Modulationsfrequenz des zweiten Vorwärts-Lichtsignals (1442) in einem GHz-Bereich liegt und sich von der des ersten Vorwärts-Lichtsignals (1422) unterscheidet, und die Modulationsfrequenz des Schutzschema-Lichtsignals (1622) in einem MHz-Bereich liegt,
wobei das erste Vorwärts-Lichtsignal (1422) und das zweite Vorwärts-Lichtsignal (1442) in einem Bereich von 800 nm bis 1600 nm bei einer Modulationsfrequenz von 1 GHz oder größer liegen und das Schutzschema-Lichtsignal in einem Bereich von 400 nm bis 750 nm bei einer Modulationsfrequenz von 10 MHz oder weniger liegt; und
wobei der erste Lichtemitter (142) eine erste Laserdiode mit einer Wellenlänge von 1310 nm ist, der zweite Lichtemitter (144) eine zweite Laserdiode mit einer Wellenlänge von 1550 nm ist und der dritte Lichtemitter (162) eine Licht emittierende Diode ist.

2. Die bidirektionale HDCP-basierte Übertragungsvorrichtung (1) nach Anspruch 1, wobei das zumindest eine Rückwärts-Lichtsignal (1622) auch ein Kontrolllichtsignal umfasst, das Rückwärts-Übertragungsmodul (16) weiterhin einen vierten Lichtemitter umfasst, der optisch an die zweite Facette (1224) des Kerns (122) der optischen Faser (12) angekoppelt ist, um das Kontrolllichtsignals in die zweite Facette (1224) des Kerns (122) zu emittieren, wenn er betrieben wird, wobei das Kontrolllichtsignal dann über die optische Faser (12) übertragen wird, wobei der erste Photodetektor (146) ebenfalls das über die optische Faser (12) übertragene Kontrolllichtsignal empfängt.

## Revendications

1. Appareil de transmission de données (1) basé sur HDCP, protection des contenus numériques à large bande, bidirectionnel, utilisant une fibre optique (12) comprenant un coeur (122) présentant une première facette (1222) et une seconde facette (1224), ledit appareil de transmission de données (1) basé sur HDCP comprenant :
un module de transmission avant (14), destiné à être optiquement couplé à la première facette (1222) du coeur (122) de la fibre optique (12), et émettant au moins deux signaux de lumière avant (1422, 1442) associés à des données HDCP dans la première facette (1222) du coeur (122), le module de transmission avant (14) transmettant les au moins deux signaux de lumière avant (1422, 1442) sur la fibre optique (12), dans lequel le module de transmission avant (14) comprend :
un premier émetteur de lumière (142), destiné à être optiquement couplé à la première facette (1222) du coeur (122) de la fibre optique (12), pour émettre le premier signal de lumière avant (1422) dans la première facette (1222) du coeur (122) quand il est commandé ;
un deuxième émetteur de lumière (144), destiné à être optiquement couplé à la première facette (1222) du coeur (122) de la fibre optique (12), pour émettre le deuxième signal de lumière avant (1442) dans la première facette (1222) du coeur (122) quand il est commandé ; et
un premier photodétecteur (146), dans lequel les zones actives du premier photodétecteur (146) présentent un diamètre compris entre 80 et 500 microns, le premier photodétecteur (146) est optiquement couplé à la première facette (1222) du coeur (122) de la fibre optique (12), pour recevoir un signal de lumière de transmission arrière (1622) transmis sur la fibre optique (12) ; et
un module de transmission arrière (16), destiné à être optiquement couplé à la seconde facette (1224) du coeur (122) de la fibre optique (12), pour recevoir les au moins deux signaux de lumière avant (1422, 1442) transmis sur la fibre optique (12), et émettant le signal de lumière arrière (1622) dans la seconde facette (1224) du coeur (122) sur la fibre optique (12) vers le module de transmission avant (14), dans lequel le signal de lumière arrière (1622) comprend un signal de lumière du système de protection relatif aux données HDCP, le module de transmission arrière (16) comprend en outre un second photodétecteur (164), dans lequel les zones actives du second photodétecteur (164) présentent un diamètre compris entre 80 et 500 microns ;
dans lequel le module de transmission avant (14) et le module de transmission arrière (16) sont capables de transmettre respectivement les deux signaux de lumière avant (1422, 1442) et le signal de lumière arrière (1622) de manière simultanée ; et
dans lequel les formats du premier signal de lumière (1422), du deuxième signal de lumière avant (1442) et du signal de lumière du système de protection (1622) sont conformes aux spécifications HDCP ; et
dans lequel le module de transmission arrière (16) comprend :
un troisième émetteur de lumière (162), destiné à être optiquement couplé à la seconde facette (1224) du coeur (122) de la fibre optique (12), pour émettre le signal de lumière du système de protection dans la seconde facette (1224) du coeur (122) quand il est commandé ; et
le second photodétecteur (164), destiné à être optiquement couplé à la seconde facette (1224) du coeur (122) de la fibre optique (12), pour recevoir le premier signal de lumière avant (1422) et le deuxième signal de lumière avant (1442) transmis sur la fibre optique (12) ; et
dans lequel la fréquence de modulation du premier signal de lumière avant (1422) se situe dans une plage de l'ordre du GHz, la fréquence de modulation du deuxième signal de lumière avant (1442) se situe dans une plage de l'ordre du GHz et diffère de celle du premier signal de lumière avant (1422), et la fréquence de modulation du signal de lumière du système de protection (1622) se situe dans une plage de l'ordre du MHz ;
dans lequel le premier signal de lumière avant (1422) et le deuxième signal de lumière avant (1442) se situent dans une plage comprise entre 800 nm et 1600 nm à une fréquence de modulation égale ou supérieure à 1 GHz, et le signal de lumière du système de protection se situe dans une plage comprise entre 400 nm et 750 nm à une fréquence de modulation égale ou inférieure à 10 MHz ; et
dans lequel le premier émetteur de lumière (142) est une première diode laser ayant une longueur d'onde de 1310nm, le deuxième émetteur de lumière (144) est une deuxième diode laser ayant une longueur d'onde de 1550 nm, et le troisième émetteur de lumière (162) est une diode électroluminescente.

2. Appareil de transmission de données (1) basé sur HDCP bidirectionnel selon la revendication 1, dans lequel le au moins un signal de lumière arrière (1622) comprend également un signal de lumière de commande, le module de transmission arrière (16) comprend en outre un quatrième émetteur de lumière, optiquement couplé à la deuxième facette (1224) du coeur (122) de la fibre optique (12), pour émettre le signal de lumière de commande dans la seconde facette (1224) du coeur (122) quand il est commandé, le signal de lumière de commande est alors transmis sur la fibre optique (12), le premier photodétecteur (146) reçoit également le signal de lumière de commande transmis sur la fibre optique (12).
